Europäisches Patentamt

European Patent Office

Office européen des brevets

(11) Publication number: **0 494 448 A1**

## EUROPEAN PATENT APPLICATION

(21) Application number: **91122222.2**

(22) Date of filing: **24.12.91**

(51) Int. Cl.5: **C21D 8/02**, C21D 8/10,
C22C 38/04

A request for addition of JP priority 413017 of 25.12.90 has been filed pursuant to Rule 88 EPC.

(30) Priority: **29.12.90 JP 418481/90**
**25.12.90 JP 413017/90**

(43) Date of publication of application:
**15.07.92 Bulletin 92/29**

(84) Designated Contracting States:
**DE**

(71) Applicant: **NKK CORPORATION**
**1-2, Marunouchi 1-chome Chiyoda-ku**
**Tokyo 100(JP)**

(72) Inventor: **Maeda, Tatsuo, c/o Patent and**
**License Dept.**
**of NKK Corporation, 1-1 Minamiwatarida-cho**
**Kawasaki-ku, Kawasaki 210(JP)**
Inventor: **Takamura, Toshihiro, c/o Patent and**
**License Dept.**
**of NKK Corporation, 1-1 Minamiwatarida-cho**
**Kawasaki-ku, Kawasaki 210(JP)**
Inventor: **Ishizawa, Yoshiichi, c/o Patent and**
**License Dept.**
**of NKK Corporation, 1-1 Minamiwatarida-cho**
**Kawasaki-ku, Kawasaki 210(JP)**
Inventor: **Sugimoto, Yuji, c/o Patent and**
**License Dept.**
**of NKK Corporation, 1-1 Minamiwatarida-cho**
**Kawasaki-ku, Kawasaki 210(JP)**
Inventor: **Morimoto, Mitoshi, c/o Patent and**
**License Dept.**
**of NKK Corporation, 1-1 Minamiwatarida-cho**
**Kawasaki-ku, Kawasaki 210(JP)**
Inventor: **Sugayoshi, Tetsuro, c/o Patent and**
**License Dept.**
**of NKK Corporation, 1-1 Minamiwatarida-cho**
**Kawasaki-ku, Kawasaki 210(JP)**
Inventor: **Nishimura, Fumihiro, c/o Patent and**
**License Dept.**
**of NKK Corporation, 1-1 Minamiwatarida-cho**
**Kawasaki-ku, Kawasaki 210(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) Method for manufacturing electric-resistance-welded steel pipe with high strength.

(57) A method for manufacturing an electric-resistance-welded steel pipe with high strength comprises : hot-rolling a slab having 0.05 to 0.30 wt.% C, 0.6 to 2.0 wt.% Mn, 0.03 to 0.70 wt.% Si with the balance being Fe and inevitable impurities into a hot-rolled steel sheet ; annealing continuously the hot-rolled steel sheet; and making the continuously annealed hot-rolled steel sheet into an electric-resistance-weld steel pipe. After the step of hot-rolling the slab into a hot-rolled steel sheet, the step of cold-rolling the hot-rolled steel sheet into a cold-rolled steel sheet can be added.

FIG. 1

```
┌─────────────────┐
│   HOT ROLLING   │───────────────┐
└─────────────────┘               │
         │                        │
         ▼                        │
┌─────────────────┐               │
│    PICKLING     │               │
└─────────────────┘               │
         │                        │
         ▼                        │
┌─────────────────┐               │
│  COLD ROLLING   │               │
└─────────────────┘               │
         │                        │
         │◄───────────────────────┘
         ▼
┌─────────────────┐
│   QUENCHING     │
└─────────────────┘
         │
         ▼
┌─────────────────┐
│  HEAT TREATING  │
└─────────────────┘
         │
         ▼
┌─────────────────┐
│    PICKLING     │
└─────────────────┘
         │
         ▼
┌─────────────────┐
│    SLITTING     │
└─────────────────┘
         │
         ▼
┌──────────────────────────┐
│  ELECTRIC-RESISTANCE-     │
│  WELDING                  │
└──────────────────────────┘
         │
         ▼
┌─────────────────┐
│    CUTTING      │
└─────────────────┘
```

The present invention relates to a method for manufacturing an electric-resistance-welded steel pipe with high strength for a door impact bar used for cars, and more particularly to a method for manufacturing the same for a door impact bar set in such a limited space as an inside of a door of an automobil.

In regard to doors for vehicles such as automobils, a reinforcing material made of steel pipe or the like is applied to the inside of a door to secure safety of men in a car when another car clashes into the side of the car and to lighten car weight. This reinforcement material is referred to as a door impact bar. Japanese Patent Application Laid Open No.197525/90 discloses a method of manufacturing an electric-resistance-welded steel pipe as manufactured or an electric-resistance-welded steel pipe having a tensile strength of from 60 to 100 $kgf/mm^2$ after stress relief annealing at a low temperature has been applied to the pipe.

It is undesirable, however, to use an electric-resistance-welded steel pipe manufacured by the above-mentioned prior art method as the door impact bar. If the tensile strength is from 60 to 100 $kgf/mm^2$, such a electric-resistance-welded pipe is insufficient for the door impact bar. Even though only this tensile strength is improved, properties effective for the door impact bar cannot be obtained. Bend is easy to occur in such a pipe and yield for manufacturing a door impact bar is lowered.

To overcome the mentioned disadvantages, it is considered that cold-rolled steel sheets whose chemical compositios are specified or to which predetermined elements have been added are used for making an electric-resistance-welded steel pipe. To the manufactured pipe, such treatment and soaking, quenching as annealing are applied. These treatment processes are complicated and require much manufacturing process hours. And the price of a final product goes up.

It is an object of the present invention to provide a method for manufacturing an electric-resistance-welded steel pipe with high strength and with less bending properties.

To attain the above-described object, the present invention provides a method for manufacturing an electric-resistance-welded steel pipe with high strength, comprising :

hot-rolling a slab having 0.05 to 0.30 wt.% C, 0.6 to 2.0 wt.% Mn, 0.03 to 0.70 wt.% Si with the balance being Fe and inevitable impurities into a hot-rolled steel sheet ;

annealing the hot-rolled steel sheet continuously ; and

making the continuously annealed steel sheet into an electric-resistance-weld steel pipe.

Furthermore, the present invention provides a method for manufacturing an electric-resistance-welded steel pipe with high strength, comprising :

hot-rolling a slab having 0.05 to 0.30 wt.% C, 0.6 to 2.0 wt.% Mn, 0.03 to 0.70 wt.% Si, at least one selected from the group consisting of 0.05 wt.% or less Nb, 1.2 wt.% or less Cr, 0.5 wt.% Mo, 0.1 wt.% or less V, 0.05 wt. % or less Ti and 0.005 wt.% B with the balance being Fe and inevitable impurities into a hot-rolled steel sheet ;

annealing continuously the hot-rolled steel sheet ; and

making the continuously annealed hot-rolled steel sheet into an electric-resistance-weld steel pipe.

In the mentioned process, it can be also effective to carry out process wherein after the step of hot-rolling the slab into a hot-rolled steel sheet, the hot-rolled steel sheet is cold-rolled into a cold-rolled steel sheet and then, the cold-rolled steel sheet is continuously annealed.

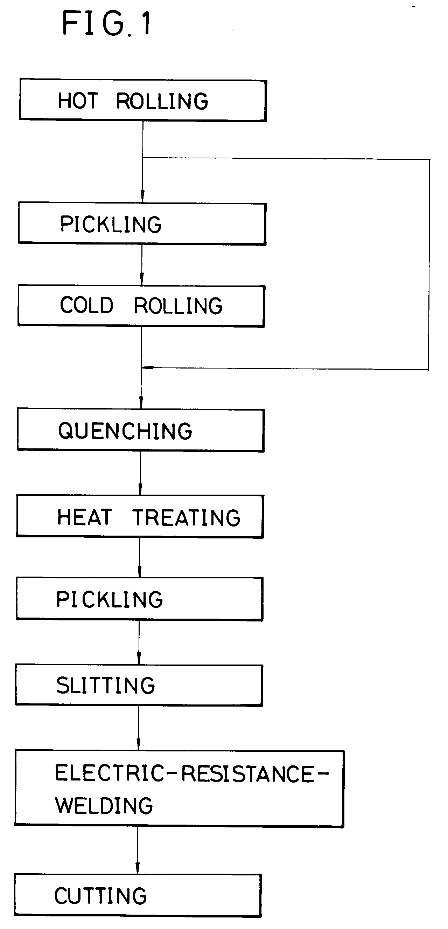

Fig. 1 is a block diagram showing the manufacturing process of the present invention.

The reason for limiting elements of steel will now be described.

C is an element which producess a martensite and increases hardness of the martensite. C is an element indispensable for obtaining a strength which is an object of the present invention. When the content of C is less than 0.05 wt.%, a strength desirable for an impact bar cannot be obtained. When the content of C exceeds 0.30 wt.%, a slab is liable to be cracked, an impact resistance properties of a final product is lowered or weldability of the product at such a time as $CO_2$ gas shielded arc welding being performed is lowered. The content of 0.05 to 0.30 wt.% C is desirable.

Mn is an element increasing a hardenability of an austenite. The content of 0.6 wt.% or more Mn is required to control an amount of martensite and to stably obtain a predetermined strength. When the content of Mn exceeds 2.0 wt.%, an effect is suturated in the case of carrying out a continuos annealing of a steel sheet by means of a rapid water quenching. Conversely, such content has a bad influence on a bending workability of an electric-resistance-welded steel pipe during manufacturing of a pipe. The content of 0.6 to 2.0 wt.% Mn is desirable.

Si is a deoxidizing element. Si contributes to mechanical properties of a steel sheet and increases a ductility of the steel sheet. When the content of Si is less than 0.03 wt.%, a predetermined mechanical property or ductility cannot be obtained. However, when the content of Ss exceeds 0.7 wt.%, spattering often occurs during electric-resistance welding, which lowers mechanical properties and an impact resistance properties of an electric-resistance-welded steel pipe. The content of 0.03 to 0.70 wt.% Si is desirable.

Cr, Mn and Si are elements indispensable for an electric-resistance-welded steel pipe of the present invention, and the balance elements are Fe and inevitable impurities. Quality of an electric-resistance-welded seam portion of a steel pipe is improved by the above-mentioned range of elements.

In the present invention, however, at least one selected from the group consisting of Nb, Cr, Mo, V, Ti and B can be added to steel within a predetermined range as the case may be required. The property of each of the elements is effectively utilized for purposes.

Nb contributes to making finer martensite structure of steel and to improving hardenabilty of steel. Cr, Mo, V, Ti and B are elements increasing the hardenability. When the content of Nb exceeds 0.05 wt.%, the spatterring is liable to be generated during electric-resistance welding, which lowers the mechanical properties of an electric-resistance welded seam portion. 0.05 wt.% is determined to be the upper limit of the content of Nb. When Cr is over 1.2 wt.%, Mo over 0.5 wt.%, V over 0.1 wt.% or Ti over 0.05%, oxides such as $Cr_2O_3$, $MoO_2$, $V_2O_3$ or $TiO_2$ resides in an electric-resistance-welded seam portion. This results in lowering mechanical propertyies of the seam portion or impact resistance properties of a manufactured steel pipe. When the content of B exceeds 0.005 wt. %, workability of steel is worsened.

The treatment as shown in Fig. 1 is applied to the steel having the chemical compositions mentioned above.

The steel having such compositions is hot-rolled into a hot-rolled steel sheet, and then the hot-rolled steel sheet is cold-rolled into a cold-rolled steel sheet. The cold-rolled steel sheet is transferred to a continuous annealing furnace. In the furnace, the cold-rolled steel sheet is heated, soaked and quenched. That is to say, the cold-rolled steel sheet is heated up to a temperature ranging 800-900°C and is soaked at the temperature for 30 seconds or more. It is preferable to keep the heating temperature 800 °C or more for obtaining austenite structure. When the heating temperature is over 900 °C, austenite structure of steel is coasened in particle, and workability and impact resistance properties of steel are unfavourably affected. When the soaking time is less than 30 seconds, temperature distribution of the steel sheet varies widely. For this varaity of the temperature distribution, austenite structure of the steel sheet in width direction fails to have uniformity. The rapid water quenching is applied to the soaked steel. The cooling rate is preferable to range 200 to 1500 °C/sec. When the rate is less than 200 °C/sec. martensite is not desirably produced. When it is over 1500 °C/sec., it is remarkably unfavourable in view of commercial production. The cooling rate of 500 to 1000 °C/sec. is more preferable. The rapid water quenching with the cooling rate of 200 to 1500 °C/sec. can be applied, by using jet-water in a cooling zone, to the cold-rolled steel sheet being transferred at a running rate of 50 to 120 m/min.

After continuous annealing comprising processes of heating, soaking and quenching, another heat treatment can be applied to the cold-rolled steel sheet. If the continuously annealed steel sheet is left as annealed without such further heat treatment, C included in solid solution is unstable. For this reason, tensile strength of the steel sheet varies when an door impact bar is painted. By this further heat treatment, the C in solid sulution becomes stable against heat and thus, the tensile strength is not changeable at the time of the painting. The temperature of the further heat treatment is preferable to be 100 to 300°C. If it is less than 100 °C, the effect of the stability is not obtained. If it exceeds 300 °C, martensite is softened and the strength is lowered.

The cold-rolled steel sheet which has been continuously annealed or anealed and then heat-treated is slitted in a predetermined width so as to meet a steel pipe diameter which is to be manufactured. The slitted steel sheet is formed by forming rolls of an electric-resistance-weld mill to be rounded and the both edges of the steel sheet confronted between welding electrodes are welded.

In the present invention, as mentioned above, the manufacture process is continuously well combined up to the manufacturing of an electric-resistance-welded pipe. And, further a pipe which has been manufactured by elecric-resistance-welding on a process line and then cut in sequence into pipes of a predetermined length on the same line. The cut pipes are used as cut for intended impact bars. The manufacture of an erectric-resistance-welded pipe is carried out efficiently and continuously.

In the invention, after the hot-rolling a slab into a hot-rolled steel sheet, a process of annealing the hot-rolled steel sheet can be performed. In this case, a process of cold-rolling the hot-rolled steel sheet into a cold-rolled steel sheet can be omitted.

Example

Steel of the present invention having chemical compositions shown in Table 1 was prepared.

Table 1

| No | C | Si | Mn | Nb | Cr | Mo | V | Ti | B |
|----|------|------|------|-------|-----|-----|-------|-------|-------|
| 1 | 0.18 | 0.33 | 0.92 | | | | | | |
| 2 | 0.16 | 0.33 | 1.52 | 0.012 | | | | | |
| 3 | 0.16 | 0.33 | 1.52 | | 0.9 | | | | |
| 4 | 0.16 | 0.33 | 1.52 | | | 0.4 | | | |
| 5 | 0.16 | 0.33 | 1.52 | | | | 0.058 | | |
| 6 | 0.16 | 0.33 | 1.52 | | | | | 0.022 | |
| 7 | 0.16 | 0.33 | 1.52 | | | | | 0.008 | 0.002 |
| 8 | 0.08 | 0.10 | 0.68 | 0.005 | 0.4 | 0.3 | 0.044 | 0.006 | 0.002 |

Those steels shown in Table 1 were rolled at a finish rolling temperature of $Ar_3$ transformation point or more, and coiled up a t a temperature of 500 to 650 °C to produce the hot-rolled steel sheet. The hot-rolled steel sheet was pickled at a pickling tank. The pickled hot-rolled steel sheet was cold-rolled into a cold-rolled steel sheet with thickness of 2.1 mm. The cold-rolled steel sheet was transferred to a continuous annealing furnace. The cold-rolled steel sheet was heated up to 870°C at heating zone of the continuous annealing furnace and then, was soaked for 5 minutes at a soaking zone of the furnace. The soaked steel sheet was cooled at a rate of 600 to 800 sec. at a cooling zone of the furnace. The continuously annealed cold-rolled steel sheet was transferred to an electric-resistance weld mill. At the mill the steel sheet was electric-resistance-welded through forminng rolls and squeeze rolls.

As comparison of Examples of the present invention, controllers of electlic resistance-welded-pipes were manufactured, using steel of No.2 shown in Table 1 by the prior art method. In the prior art method, an electric-resistance-welded pipe was manufactured, using a hot-rolled and cold-rolled steel sheet. The manufactured pipe was cut into pipes with a predetermined length. The cut pipes were soaked at 870 °C and water-quenched at a cooling rate of 600 to 800 °C/sec. Further heat treatment was applied to the manufactured pipes for 10 minutes at 100 to 150°C . The results of measurements of mechanical propertis and bending of those pipes were listed in Table 2, as comparison of Examples and Controllers. Nos. 1 to 8 are for Examples of the present invention and Nos. 9 to 11 are for Controllers.

According to results of Table 2, in Examles of the present invention tensile strength of 120 kgf/mm$^2$ or more was marked and bendings of 1.3 mm or less per 1 meter length of a pipe was shown. Those of the controllers were so large as 3 mm or more per 1 meter length of a pipe. An electric-resistance-welded pipe of the present invention which is so small in bending as is fitted for being set in a limited space such as an inside of a door and thus, serves suitably for a reinforcing material for a door.

As mentioned, since an electric-resistance-welded pipe manufactured in accordance with the present invention has a high strength and less bending property, the present invention can provide a product which can be used effectively for such a limited space as a door. Thus, the present invention is industrially useful.

Table 2

| No | Steel No. of Table (°C) | Soking Temp. (°C) | Heat Treatment | Results | | |
|---|---|---|---|---|---|---|
| | | | | Yield Strength (kgf/mm$^2$) | Tensile Strength (kgf/mm$^2$) | Bending ( mm ) |
| 1 | 1 | 885 | 170 | 117 | 127 | 1.2 |
| 2 | 2 | 870 | 185 | 127 | 129 | 0.4 |
| 3 | 3 | 896 | 275 | 141 | 155 | 0.7 |
| 4 | 4 | 859 | 112 | 139 | 159 | 1.3 |
| 5 | 5 | 836 | 230 | 138 | 151 | 1.0 |
| 6 | 6 | 854 | 296 | 126 | 131 | 0.9 |
| 7 | 7 | 889 | 161 | 145 | 157 | 0.6 |
| 8 | 8 | 810 | 127 | 118 | 123 | 1.2 |
| 9 | 2 | 892 | 182 | 108 | 127 | 2.3 |
| 10 | 2 | 865 | 189 | 101 | 131 | 3.1 |
| 11 | 2 | 864 | 187 | 96 | 129 | 2.8 |

**Claims**

1. A method for manufacturing an electric-resistance-welded steel pipe with high strength, characterized by comprising:

   hot-rolling a slab having 0.05 to 0.30 wt.% C, 0.6 to 2.0 wt.% Mn, 0.03 to 0.70 wt.% Si with the balance being Fe and inevitable impurities into a hot-rolled steel sheet ;

   annealing continuously the steel sheet; and making the continuously annealed steel sheet into an electric-resistance-weld steel pipe.

2. The method of claim 1, characterized in that :

   said step of annealing continuously the hot-rolled steel sheet comprises :

   heating the hot-rolled steel sheet to a temperature of from 800 to 900 °C and soaking the hot-rolled steel sheet at the temperature at least for 30 seconds ; and

   cooling rapidly the soaked hot-rolled steel sheet at a rate of 200 to 1500 °C/sec. by water quenching.

3. The method of any of claim 1, characterized in that the continuously annealed steel sheet is heat-treated at a temperature of 100 to 300 °C.

4. A method for manufacturing an electric-resistance-welded steel pipe with high strength, characterized by comprising:

   hot-rolling a slab having 0.05 to 0.30 wt.% C, 0.6 to 2.0 wt.% Mn, 0.03 to 0.70 wt.% Si with the balance being Fe and inevitable impurities into a hot-rolled steel sheet ;

   cold-rolling the hot-rolled steel sheet into a cold-rolled steel sheet ;

   annealing continuously the cold-rolled steel sheet ; and

   making the continuously annealed steel sheet into an electric-resistance-weld steel pipe.

5. The method of claim 4, characterized in that :

   said step of annealing continuously the cold-rolled steel sheet comprises :

   heating the cold-rolled steel sheet to a temperature of from 800 to 900°C and soaking the cold-rolled steel sheet at the temperature at least for 30 seconds ; and

   cooling rapidly the soaked cold-rolled steel sheet at a rate of 200 to 1500°C/sec. by water quenching; and

6. The method of claim 4, characterized in that the continuously annealed steel sheet is heat-treated at a temperature of 100 to 300°C.

7. A method for manufacturing an electric-resistance-welded steel pipe with high strength, characterized by comprising:

hot-rolling a slab having 0.05 to 0.30 wt.% C, 0.6 to 2.0 wt.% Mn, 0.03 to 0.70 wt.% Si and at least one selected from the group consisting of 0.05 wt.% or less Nb, 1.2 wt.% or less Cr, 0.05 wt.% or less Mo, 0.1 wt.% or less V, 0.05 wt. % or less Ti and 0.005 wt.% B with the balance of Fe and inevitable impurities into a hot-rolled steel sheet ;

annealing continuously the hot-rolled steel sheet ; and

making the continuously annealed steel sheet into an electric-resistance-welded steel pipe.

8. The methof of claim 7, characterized in that :

said step of annealing continuously the hot-rolled steel sheet comprises :

heating the hot-rolled steel sheet to a temperature of from 800 to 900 ° C and soaking the hot-rolled steel sheet at the temperature at least for 30 seconds.

cooling rapidly the heated hot-rolled steel sheet at a rate of 200 to 1500 ° C/sec. by water quenching; and

9. The method of claim 7, characterized in that the continuously annealed steel sheet is heat-treated at a temperature of 100 to 300 ° C.

10. A method for manufacturing an electric-resistance-welded steel pipe with high strength, charicterized by comprising:

hot-rolling a slab having 0.05 to 0.30 wt.% C, 0.6 to 2.0 wt.% Mn, 0.03 to 0.70 wt.% Si and at least one selected from the group consisting of 0.05 wt.% or less Nb, 1.2 wt.% or less Cr, 0.5 wt.% Mo, 0.1 wt.% or less V, 0.05 wt. % or less Ti and 0.005 wt.% B with the balance betng Fe and inevitable impurities into a hot-rolled steel sheet ;

cold-rolling the hot-rolled sheet into a cold-rolled steel sheet ;

annealing continuously the cold-rolled steel sheet ; and

making the continuously annealed steel sheet into an electric-resistance-weld steel pipe.

11. The method of claim 10, characterized in that :

said step of annealing continuously the cold-rolled steel sheet comprises :

heating the cold-rolled steel sheet to a temperature of from 800 to 900° C and soaking the cold-rolled steel sheet at the temperature at least for 30 seconds ; and

cooling rapidly the soaked cold-rolled steel sheet to at a rate of 200 to 1500 ° C/sec. by rapid cooling.

12. The method of claims 10, characterrized in that the continuously annealed steel sheet is heat-treated at a temperature of 100 to 300 ° C.

# FIG.1

```
┌─────────────────────┐
│    HOT ROLLING      │
└─────────────────────┘
           │
┌─────────────────────┐
│      PICKLING       │
└─────────────────────┘
           │
┌─────────────────────┐
│    COLD ROLLING     │
└─────────────────────┘
           │
┌─────────────────────┐
│     QUENCHING       │
└─────────────────────┘
           │
┌─────────────────────┐
│   HEAT TREATING     │
└─────────────────────┘
           │
┌─────────────────────┐
│      PICKLING       │
└─────────────────────┘
           │
┌─────────────────────┐
│      SLITTING       │
└─────────────────────┘
           │
┌─────────────────────┐
│ ELECTRIC-RESISTANCE-│
│      WELDING        │
└─────────────────────┘
           │
┌─────────────────────┐
│      CUTTING        │
└─────────────────────┘
```

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 410 369 (WAID ET AL.)<br>* claims 1-7 *<br>--- | 1-6 | C21D8/02<br>C21D8/10<br>C22C38/04 |
| A | FR-A-1 412 356 (SOCIETE DES ACIERIES DE POMPEY & COMPAGNIE DES TUBES DE NORMANDIE)<br>* the whole document *<br>--- | 1-12 | |
| A | US-A-4 799 971 (MC DOUGALL ET AL.)<br>* the whole document *<br>--- | 1-12 | |
| A | US-A-4 210 467 (KLATZER ET AL.)<br>* claims 1-8 *<br>----- | 1-12 | |

**TECHNICAL FIELDS SEARCHED (Int. Cl.5 )**

C21D
C22C

The present search report has been drawn up for all claims

| Place of search | Date of completion of the search | Examiner |
|---|---|---|
| THE HAGUE | 22 APRIL 1992 | LIPPENS M.H. |

EPO FORM 1503 03.82 (P0401)